# FASCICULE DE BREVET EUROPEEN

(11) **EP 3 947 939 B1**
(45) Date de publication et mention de la délivrance du brevet: **24.04.2024**
(21) Numéro de dépôt: 20728109.8
(22) Date de dépôt: 18.03.2020
(51) Int. Cl.: F02C 9/48, B64C 11/48, F01D 7/00, G05B 13/02, F02K 3/02

(54) **PROCÉDÉ ET SYSTÈME DE COMMANDE D'UNE TURBOMACHINE AVEC GESTION DES SATURATIONS DE COMMANDE**
VERFAHREN UND SYSTEM ZUR STEUERUNG EINER TURBOMASCHINE MIT STEUERUNGSSÄTTIGUNGSVERWALTUNG
METHOD AND SYSTEM FOR CONTROLLING A TURBOMACHINE WITH CONTROL SATURATIONS MANAGEMENT

(30) Priorité: 26.03.2019 FR 1903141
(43) Date de publication de la demande: 09.02.2022
(73) Titulaire: SAFRAN AIRCRAFT ENGINES, 75015 Paris (FR)
(72) Inventeur: RASLAIN, Typhaine, 77550 MOISSY-CRAMAYEL (FR); LE BRUN, Christophe, Marc, Alexandre, 77550 MOISSY-CRAMAYEL (FR); CLERMONTE, Sylvain, 77550 MOISSY-CRAMAYEL (FR)
(74) Mandataire: Cabinet Beau de Loménie
(86) Numéro de dépôt international: PCT/FR2020/050587
(87) Numéro de publication internationale: WO 2020/193919

(56) Documents cités:
- EP-A2- 2 623 711
- US-A- 4 772 180
- US-A1- 2007 162 161
- US-A1- 2013 211 550

## Description

### Domaine Technique

L'invention concerne le domaine des systèmes de commande de turbomachines, notamment de turbopropulseurs ou de turbomachines à soufflante non carénée, aussi connu en anglais sous la dénomination « Unducted Single Fan » ou USF.

### Technique antérieure

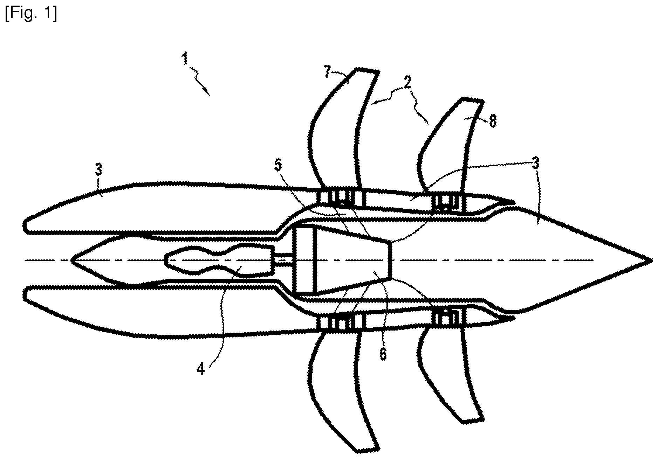

La figure 1 représente une turbomachine à soufflante non carénée selon l'état de l'art, ou soufflante non carénée. Comme cela est illustrée sur la figure 1, une soufflante non carénée 1 aussi appelée « open rotor » en anglais, est un turboréacteur d'aéronef dont la soufflante 2 est fixée directement sur la turbine de puissance et en dehors d'une nacelle 3, ce qui permet d'augmenter le taux de dilution du moteur par rapport à un turboréacteur caréné, et ainsi de réduire la consommation en carburant.

Un open rotor est généralement doté d'un générateur de gaz 4 et d'une turbine libre 5 entraînant, via une boîte de réduction 6, deux hélices contra-rotatives à pas variables 7 et 8.

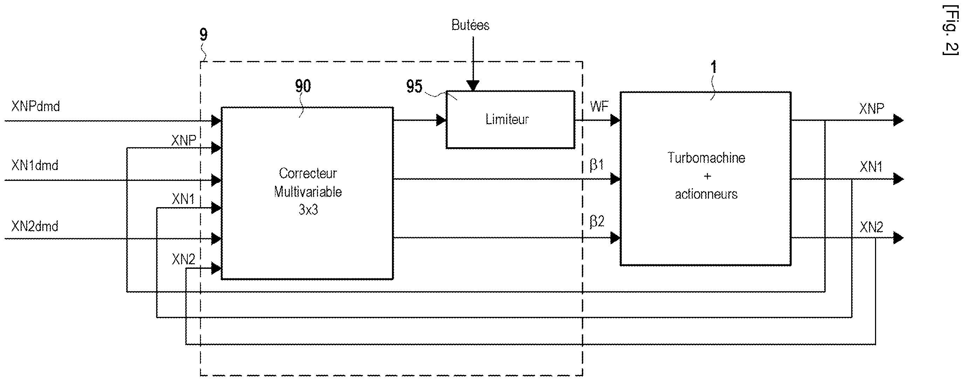

Comme cela est illustré sur la figure 2 qui représente schématiquement un système de commande d'un open rotor 1, un open rotor 1 peut être considéré d'un point de vue de la commande comme un système multivariable comprenant trois grandeurs de commande et trois grandeurs de sortie qui doivent être régulées. Les trois grandeurs de commande de l'open rotor 1 sont le débit de carburant, noté *WF,* le pas d'hélice amont, également appelé angle de calage amont et noté β₁, et le pas d'hélice aval, également appelé angle de calage aval et noté β₂. Les trois grandeurs de sortie de l'open rotor 1 sont la vitesse de rotation du compresseur basse pression, notée *XNP,* la vitesse de rotation de l'hélice amont, notée *XN1,* et la vitesse de rotation de l'hélice aval, notée *XN2.* La vitesse de rotation de l'hélice amont et celle de l'hélice aval *XN1* et *XN2* sont asservies autour de plusieurs paliers de vitesse définis par les conditions de fonctionnement.

Un tel système comporte des couplages importants entre les différentes grandeurs de commande et de sortie.

Comme cela est illustré sur la figure 2, le système de commande 9 comprend généralement un régulateur multivariable 90 à trois entrées et trois sorties, noté également régulateur multivariable 3x3, qui prend en compte intrinsèquement les couplages entre les différentes grandeurs de commande et de sortie. Le régulateur multivariable 90 permet d'assurer un découplage satisfaisant dans la plupart des cas, afin de pouvoir faire varier les grandeurs de sortie *XNP, XN1* et *XN2* de l'open rotor 1 indépendamment les unes des autres.

Le régulateur multivariable 90 reçoit en entrée les valeurs des trois grandeurs de sortie *XNP, XN1* et *XN2* de l'open rotor 1 ainsi que trois consignes de grandeurs de sortie correspondantes XNP*_{dmd}, XN1_{dmd}* et *XN2_{dmd}.*

Cependant, pour respecter les contraintes opérationnelles de la turbomachine, la commande de débit de carburant calculée WF peut être saturée ou bien non prise en compte dans certains cas. Il existe en effet des butées minimales et maximales calculées en temps réel pour protéger le moteur du pompage pendant les phases transitoires. Cette saturation peut être réalisée par un limiteur 95 indépendamment des autres commandes.

De même, les angles de calage amont et aval peuvent être saturés également à l'aide d'autres limiteurs indépendamment de la commande de débit de carburant. Comme chaque limiteur intervient sur une commande indépendamment de l'autre commande, les commandes appliquées ne sont plus cohérentes l'une par rapport à l'autre.

Par ailleurs, différentes boucles de protection contre des survitesses, des sur-températures, des surpressions, etc. sont aussi mises en concurrence au niveau de l'élaboration de la consigne du débit de carburant.

Ces cas posent des problèmes pour le découplage. En effet, les commandes issues du correcteur multivariable 3x3 sont calculées de manière à être cohérente entre elles pour contrecarrer les interactions et assurer le découplage des sorties.

Si la valeur d'une commande est modifiée, le découplage n'est plus assuré, ce qui se traduit généralement par des dépassements sur les sorties régulées.

Par exemple, si on prend pour simplifier un régulateur multivariable 2x2, c'est-à-dire à 2 entrées de commande et deux variables de sortie à réguler, si on ne modifie pas la seconde entrée de commande lorsque la première entrée est saturée, la direction du vecteur de commande résultant formé à partir des deux vecteurs de commande initiaux, correspondant chacun à une des entrées de commande, est directement affecté et erroné.

Il a été proposé des solutions pour remédier à la désynchronisation des commandes saturées par les limiteurs. Une solution consiste à ajouter des états supplémentaires, comme la température, la pression ou l'altitude, afin de prendre en compte les contraintes de fonctionnement au moment de l'élaboration des lois de commande. Cette première solution est complexe à mettre en oeuvre.

Une autre solution consiste à recalculer la commande non-affectée par la saturation afin de la rendre compatible avec la commande saturée. Cette seconde solution est complexe à mettre en oeuvre et sa complexité augmente avec le nombre d'entrées/sorties. Un autre exemple de système de contrôle est présenté dans le document US 2013/211550 A1.

Il est notamment connu du document FR 3 055 029 un système de commande d'un turbopropulseur avec une gestion des saturations de commande qui calcule les erreurs d'asservissement maximales admissibles pour éviter les saturations des commandes. Le procédé mis en oeuvre par le système repose sur l'inversion du transfert du correcteur qui ne peut pas être utilisé sur toutes les turbomachines.

Les solutions de l'art antérieur pour remédier à la désynchronisation des commandes saturées par les limiteurs ne sont donc pas satisfaisantes.

### Exposé de l'invention

L'invention vise à proposer un procédé et un système de commande d'une turbomachine permettant de synthétiser des commandes cohérentes et respectant les contraintes de fonctionnement du turbopropulseur de manière simple.

Selon un premier aspect de l'invention, il est proposé un procédé de commande d'une première, d'une deuxième et d'une troisième variables d'une turbomachine en fonction d'une première, d'une deuxième et d'une troisième grandeurs de commande d'une turbomachine pouvant chacune être saturée en fonction des paramètres de fonctionnement de la turbomachine, le procédé de commande comprenant :
- une mesure des valeurs des trois variables de la turbomachine,
- une réception, pour chacune desdites trois variables reçues, d'une consigne correspondante,
- une première détermination dans laquelle sont déterminées les premières valeurs des trois grandeurs de commande de la turbomachine à partir des valeurs des trois variables et desdites trois consignes correspondantes,
- une sélection de la valeur de la première grandeur de commande à délivrer à la turbomachine parmi une valeur maximale de la première grandeur de commande, une valeur minimale de la première grandeur de commande et la valeur de la première grandeur de commande issue de ladite première détermination, la première sélection dépendant des paramètres de fonctionnement de la turbomachine,
- une seconde détermination dans laquelle sont déterminées des secondes valeurs des deuxième et troisième grandeurs de commande de la turbomachine à partir des valeurs des trois variables, des deuxième et troisième consignes correspondante, et de la valeur de la première grandeur de commande sélectionnée lors de la première sélection,
- un choix du couple de valeurs des deuxième et troisième grandeurs de commande à délivrer à la turbomachine entre le couple des deuxième et troisième grandeurs de commande déterminées par le premier correcteur et le couple des deuxième et troisième grandeurs de commande déterminées par le second correcteur, le choix du couple de valeurs des deuxième et troisième grandeurs de commande à délivrer dépendant de la valeur de la première grandeur de commande à délivrer sélectionnée, et
- une transmission à la turbomachine de la valeur de première grandeur de commande sélectionnée et des valeurs des deuxième et troisième grandeurs de commande choisies.

Le procédé de commande selon l'invention permet ainsi de garantir d'une manière simple et efficace le découplage des grandeurs de sortie, c'est-à-dire des trois variables de la turbomachine, malgré la gestion complexe d'une des grandeurs de commande telle que le débit carburant.

Dans un premier aspect du procédé de commande, le procédé peut comprendre en outre une intégration de la valeur de première grandeur de commande sélectionnée et des valeurs des deuxième et troisième grandeurs de commande choisies avant leur transmission la turbomachine.

L'intégration des valeurs permet de gérer des transitions sans à-coup entre les boucles, que ce soit au niveau d'une première grandeur de commande telle que le débit carburant ou des deuxième et troisième grandeurs de commande telles que des angles de calages des pales.

Dans un second aspect du procédé de commande, la première variable correspond à la vitesse de rotation d'un compresseur basse pression de la turbomachine, la deuxième variable correspond à la vitesse de rotation d'une hélice amont de la turbomachine, et la troisième variable correspond à la vitesse de rotation d'une hélice aval de la turbomachine, la première grandeur de commande correspond au débit de carburant de la turbomachine, la deuxième grandeur de commande correspond au pas de l'hélice amont de la turbomachine et la troisième grandeur de commande correspond au pas de l'hélice aval de la turbomachine.

Dans un autre objet de l'invention il est proposé un système de commande d'une première, d'une deuxième et d'une troisième variables d'une turbomachine en fonction d'une première, d'une deuxième et d'une troisième grandeurs de commande d'une turbomachine pouvant chacune être saturée en fonction des paramètres de fonctionnement de la turbomachine, le système de commande comprenant :
- un premier correcteur à trois sorties recevant en entrée les valeurs des trois variables de la turbomachine ainsi que, pour chacune desdites trois variables reçues, une consigne correspondante, les trois sorties du premier correcteur correspondant aux trois grandeurs de commande de la turbomachine,
- une première unité de sélection configurée pour sélectionner, en fonction des paramètres de fonctionnement de la turbomachine, la valeur de la première grandeur de commande à délivrer à la turbomachine parmi une valeur maximale de la première grandeur de commande, une valeur minimale de la première grandeur de commande et la valeur de la première grandeur de commande issue de ladite première détermination,
- un second correcteur à deux sorties recevant en entrée la valeurs des trois variables de la turbomachine ainsi que la consigne de la deuxième variable et la consigne de la troisième variable et la valeur de la première grandeur de commande délivrée par la première unité de saturation, les deux sorties du second correcteur correspondant aux deuxième et troisième grandeurs de commande de la turbomachine, et
- une seconde unité de sélection configurée pour délivrer en sortie, en fonction de la sélection de la première unité de sélection, soit le couple de deuxième et troisième grandeurs de commande déterminées par le premier correcteur, soit le couple de deuxième et troisième grandeurs de commande déterminées par le second correcteur,
le système de commande délivrant en sortie, pour commander la turbomachine, la valeur de la première grandeur de commande délivrée par la première unité de saturation et les valeurs des deuxième et troisième grandeurs de commande délivrées par la seconde unité de saturation.

La solution proposée consiste ainsi à implémenter, en plus du premier correcteur multivariable à trois sorties, un second correcteur multivariable pour calculer deux grandeurs de commande telles que des angles de calages qui permettent de conserver la directionnalité, en utilisant l'information de la première grandeur de commande sélectionnée telle que le débit de carburant sélectionné.

Le second correcteur permet de gérer deux variables via deux grandeurs de commande, la deuxième et la troisième, en fonction de la valeur d'une autre grandeur de commande, la première en l'occurrence. Autrement dit, dans un cas concret, le second correcteur permet de gérer les régimes des hélices en agissant sur les angles de calage, en tenant compte de l'information du débit carburant et du régime du corps basse pression.

Les deux correcteurs tournent en parallèle et une logique de sélection permet d'utiliser l'une ou l'autre des consignes de calages, en fonction de la logique de sélection appliquée à la première grandeur de commande qui peut être indiquée par exemple via un indicateur calculé par la première unité de sélection.

Cette architecture peut être utilisée pour toute application nécessitant un contrôle multivariable avec la gestion de saturation sur une grandeur de commande telle que le débit de carburant, en particulier les turbopropulseurs, les turbomachines à soufflante non carénée.

Dans un premier aspect du système de commande, le système de commande peut comprendre en outre un intégrateur recevant en entrée la valeur de la première grandeur de commande délivrée par la première unité de saturation et les valeurs des deuxième et troisième grandeurs de commande délivrées par la seconde unité de saturation, et délivrant les valeurs traitées des première, deuxième et troisième grandeurs de commande à la turbomachine.

L'intégrateur commun et unique est placé en aval des première et seconde unités de sélection. Les premier et second correcteurs calculent ainsi des incréments de commande, qui peuvent être limités pour tenir compte des différentes contraintes (par exemple, la butée C/P). La valeur d'incrément de carburant finalement retenue est ajoutée à la commande courante de carburant par cet intégrateur.

Dans un autre objet de l'invention, il est proposé un aéronef comprenant au moins une turbomachine et au moins un système de commande tel que défini ci-dessus commandant au moins une desdites au moins une turbomachine.

Selon un aspect de l'aéronef, au moins une desdites au moins une turbomachine commandée par ledit au moins un système de commande peut être une turbomachine à soufflante non carénée.

### Brève description des dessins

[Fig. 1] La figure 1, déjà décrite, représente une turbomachine à soufflante non carénée selon l'état de l'art.
[Fig. 2] La figure 2, déjà décrite, représente schématiquement un système de commande selon l'état de l'art pour la soufflante non carénée de la figure 1.
[Fig. 3] La figure 3 représente schématiquement un système de commande d'une turbomachine selon un mode de réalisation de l'invention.
[Fig. 4] la Figure 4 présente un organigramme d'un procédé commande d'une turbomachine selon un mode de mise en oeuvre de l'invention.

### Description des modes de réalisation

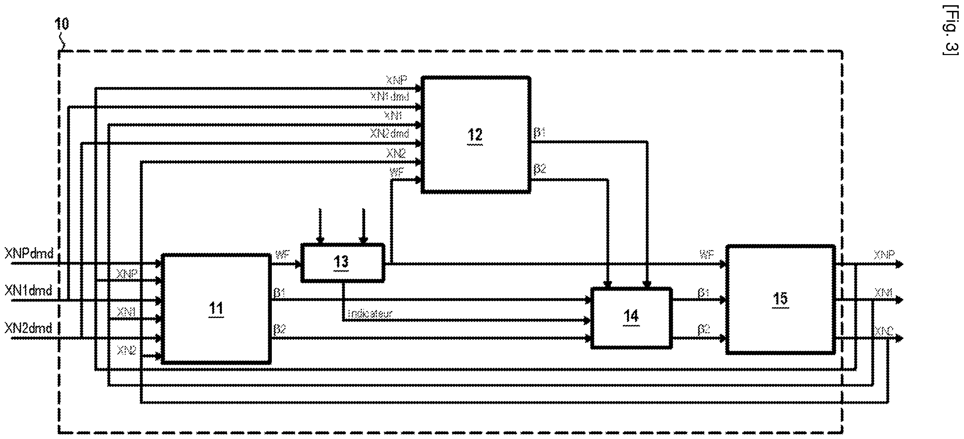

Sur la figure 3 est représenté schématiquement un système de commande 10 d'une turbomachine selon un mode de réalisation de l'invention. La turbomachine commandée par le système de commande 10 selon l'invention peut être une turbomachine 1 à soufflante non carénée telle que celle décrite sur la figure 2.

Le système de commande 10 comprend un premier correcteur 11, un second correcteur 12, une première unité de sélection 13, une seconde unité de sélection 14 et un intégrateur 15.

Le premier correcteur 11 comprend trois sorties délivrant une première valeur pour chacune des trois grandeurs de commande. La première grandeur de commande correspond au débit de carburant *W*F de l'open rotor 1, la deuxième grandeur de commande correspond au pas β₁ de l'hélice amont de l'open rotor 1 et la troisième grandeur de commande correspond au pas β₂ de l'hélice aval de l'open rotor 1.

Le premier correcteur 11 reçoit en entrée les valeurs de trois variables de l'open rotor 1, la première variable correspondant à la vitesse de rotation *XNP* d'un compresseur basse pression de l'open rotor 1, la deuxième variable correspondant à la vitesse de rotation *XN1* d'une hélice amont de l'open rotor 1, et la troisième variable correspondant à la vitesse de rotation *XN2* d'une hélice aval de l'open rotor 1. Le premier correcteur 11 reçoit également en entrée une consigne de vitesse de rotation *XNP_{dmd}* du compresseur basse pression, une consigne de vitesse de rotation *XN1_{dmd}* de l'hélice amont, et une consigne de vitesse de rotation *XN2_{dmd}* de l'hélice aval.

La première unité de sélection 13 reçoit en entrée la valeur déterminée par le premier correcteur 11 pour le débit de carburant *WF*, une valeur maximale de la première grandeur de commande *WFmax,* et une valeur minimale de la première grandeur de commande *WFmin.*

La première unité de sélection 13 est configurée pour délivrer en sortie l'une des trois valeurs précédentes *WF, WFmax* ou *WFmin* en fonction des paramètres de fonctionnement de l'open rotor 1. La valeur délivrée en sortie de la première unité de sélection 13 correspond à la valeur de la première grandeur de commande, *WF*, à délivrer à l'open rotor 1.

Le second correcteur 12 comprend deux sorties délivrant une seconde valeur pour la deuxième et la troisième grandeurs de commande β₁ et β₂. Comme le premier correcteur 11, le second correcteur 12 reçoit en entrée les valeurs de trois variables de sortie de l'open rotor 1 mesurées par les capteurs correspondants, c'est-à-dire la vitesse de rotation *XNP* du compresseur basse pression, la vitesse de rotation *XN1* de l'hélice amont et la vitesse de rotation XN2 de l'hélice aval. Le second correcteur 12 reçoit également en entrée la consigne de vitesse de rotation *XN1_{dmd}* de l'hélice amont et la consigne de vitesse de rotation *XN2_{dmd}* de l'hélice aval, mais pas la consigne de vitesse de rotation *XNP_{dmd}* du compresseur basse pression. Le second correcteur 12 reçoit en outre en entrée, la valeur du débit de carburant délivrée en sortie de la première unité de sélection 13.

Le second correcteur 12 est configuré pour déterminer une seconde valeur pour chacune des deuxième et troisième grandeurs de commande β₁ et β₂ de l'open rotor 1 en fonction notamment de la valeur sélectionnée pour la première grandeur de commande, c'est-à-dire ici le débit de carburant *WF*.

La seconde unité de sélection 14 reçoit en entrée deux couples de valeurs et un indicateur. Le premier couple de valeurs reçu correspond au couple comprenant la première valeur de la deuxième grandeur de commande β₁ et la première valeur de la troisième grandeur de commande β₂, et le second couple de valeurs reçu comprend la seconde valeur de la deuxième grandeur de commande β₁ et la seconde valeur de la troisième grandeur de commande β₂. L'indicateur reçu par l'unité de sélection 14 correspond à une indication délivrée par la première unité de sélection 13 et permettant d'indiquer laquelle des trois valeurs de la première grandeur de commande *WF* a été sélectionnée.

La seconde unité de sélection 14 est configurée pour délivrer en sortie le couple de valeurs des deuxième et troisième grandeurs de commande sélectionné en fonction de l'indicateur délivré par la première unité de sélection. La seconde unité de sélection 14 délivre ainsi en sortie soit le couple de premières valeurs de deuxième et troisième grandeurs de commande déterminées par le premier correcteur 11, soit le couple secondes valeurs de deuxième et troisième grandeurs de commande déterminées par le second correcteur 12, la sélection dépendant de la valeur de la première grandeur de commande sélectionnée par la première unité de sélection 13. Les valeurs délivrées en sortie de la seconde unité de sélection 14 correspond aux valeurs des deuxième et troisième grandeurs de commande, β₁ et β₂, à délivrer à l'open rotor 1.

Avant d'être transmise à l'open rotor 1, La valeur de la première grandeur de commande *WF* sélectionnée par la première unité de sélection 13 et les valeurs de la deuxième et de la troisième grandeurs de commande β₁ et β₂ sélectionnées par la seconde unité de sélection 14 sont délivrées à un intégrateur 15 pour éviter les à-coups dans la commande de l'open rotor 1. L'intégrateur 15 délivre ensuite à l'open rotor 1 les valeurs des première, deuxième et troisième grandeurs de commande ainsi traitées.

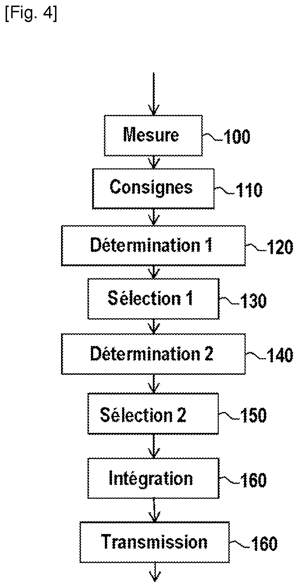

Sur la figure 4 est illustré un organigramme d'un procédé de commande mis en oeuvre par le système de commande 10.

Selon le mode de mise en oeuvre présenté sur la figure 4, le procédé de commande comprend une première étape 100 dans laquelle on mesure les valeurs des trois variables *XNP, XN1* et *XN2* de l'open rotor 1 à partir de différents capteurs dédié et on les transmets au premier correcteur 11 et au second correcteur 12.

Dans une étape suivante 110, on reçoit des consignes pour chacune des trois variables de l'open rotor 1. Plus particulièrement, dans cette étape 110, le premier correcteur 11 reçoit la consigne de vitesse de rotation *XNP_{dmd}* du compresseur basse pression, la consigne de vitesse de rotation *XN1_{dmd}* de l'hélice amont, et la consigne de vitesse de rotation *XN2_{dmd}* de l'hélice aval, et le second correcteur 12 reçoit la consigne de vitesse de rotation *XN1_{dmd}* de l'hélice amont et la consigne de vitesse de rotation *XN2_{dmd}* de l'hélice aval.

Dans une étape suivante 120, on détermine des premières valeurs pour les trois grandeurs de commande de l'open rotor 1 à partir des valeurs des trois variables *XNP, XN1* et *XN2* et des trois consignes correspondantes *XNP_{dmd}, XN1_{dmd}* et *XN2_{dmd}.*

Dans une étape suivante 130, on sélectionne la valeur de la première grandeur de commande à délivrer à l'open rotor 1 parmi une valeur maximale de la première grandeur de commande, une valeur minimale de la première grandeur de commande et la valeur de la première grandeur de commande issue de la détermination à l'étape précédente 120, la sélection dépendant des paramètres de fonctionnement de l'open rotor 1.

Dans une étape suivante 140, on détermine des secondes valeurs pour les deuxième et troisième grandeurs de commande de l'open rotor 1 à partir des valeurs des trois variables *XNP, XN1* et *XN2,* des deuxième et troisième consignes correspondantes *XN1_{dmd}* et *XN2_{dmd},* et de la valeur de la première grandeur de commande *WF* sélectionnée lors de la première sélection à l'étape précédente 130.

Dans une étape suivante 150, on réalise un choix du couple de valeurs des deuxième et troisième grandeurs de commande à délivrer à l'open rotor 1 entre le couple des deuxième et troisième grandeurs de commande déterminées à l'étape 120 et le couple des deuxième et troisième grandeurs de commande déterminées à l'étape 140, le choix du couple de valeurs des deuxième et troisième grandeurs de commande à délivrer dépendant de la valeur de la première grandeur de commande à délivrer sélectionnée à l'étape 130.

Dans une étape suivante 160, on intègre chacune des valeurs sélectionnées à l'étape 130 et à l'étape 150 à l'aide d'un intégrateur, puis à une étape suivante 170, on transmet à l'open rotor 1 les valeurs intégrées des première, deuxième et troisième grandeur de commande.

Le procédé de commande selon l'invention permet ainsi de garantir d'une manière simple et efficace le découplage des grandeurs de sortie, c'est-à-dire des trois variables de la turbomachine, malgré la gestion complexe d'une des grandeurs de commande telle que le débit carburant.

## Revendications

1. Procédé de commande d'une première, d'une deuxième et d'une troisième variables (XNP, XN₁, XN₂) d'une turbomachine (1) en fonction d'une première, d'une deuxième et d'une troisième grandeurs de commande (WF, β₁, β₂) d'une turbomachine (1) pouvant chacune être saturée en fonction des paramètres de fonctionnement de la turbomachine (1), le procédé de commande comprenant :
- une mesure (100) des valeurs des trois variables (XNP, XN₁, XN₂) de la turbomachine (1),
- une réception (110), pour chacune desdites trois variables reçues (XNP, XN₁, XN₂), d'une consigne correspondante (XNP_{dmd}, XN_{1dmd}, XN_{2dmd}),
- une première détermination (120) dans laquelle sont déterminées les premières valeurs des trois grandeurs de commande (WF, β₁, β₂) de la turbomachine (1) à partir des valeurs des trois variables (XNP, XN₁, XN₂) et desdites trois consignes correspondantes (XNP_{dmd}, XN_{1dmd}, XN_{2dmd}),
- une sélection (130) de la valeur de la première grandeur de commande (WF) à délivrer à la turbomachine (1) parmi une valeur maximale de la première grandeur de commande, une valeur minimale de la première grandeur de commande et la valeur de la première grandeur de commande issue de ladite première détermination, la première sélection dépendant des paramètres de fonctionnement de la turbomachine (1),
- une seconde détermination (140) dans laquelle sont déterminées des secondes valeurs des deuxième et troisième grandeurs de commande (β₁, β₂) de la turbomachine (1) à partir des valeurs des trois variables (XNP, XN₁, XN₂), des deuxième et troisième consignes correspondantes (XN_{1dmd}, XN_{2dmd}), et de la valeur de la première grandeur de commande sélectionnée lors de la sélection (130),
- un choix (150) du couple de valeurs des deuxième et troisième grandeurs de commande à délivrer à la turbomachine entre le couple des deuxième et troisième grandeurs de commande (β₁, β₂) déterminées lors de la première détermination (120) et le couple des deuxième et troisième grandeurs de commande (β₁, β₂) déterminées lors de la seconde détermination (140), le choix du couple de valeurs des deuxième et troisième grandeurs de commande (β₁, β₂) à délivrer dépendant de la valeur de la première grandeur de commande (WF) à délivrer sélectionnée lors de la sélection (130), et
- une transmission (170) à la turbomachine (1) de la valeur de première grandeur de commande sélectionnée (WF) et des valeurs des deuxième et troisième grandeurs de commande (β₁, β₂) choisies.

2. Procédé de commande selon la revendication 1, comprenant en outre une intégration (160) de la valeur de première grandeur de commande sélectionnée (WF) et des valeurs des deuxième et troisième grandeurs de commande (β₁, β₂) choisies avant leur transmission la turbomachine (1).

3. Procédé de commande selon l'une des revendications 1 ou 2, dans lequel la première variable (XNP) correspond à la vitesse de rotation d'un compresseur basse pression de la turbomachine (1), la deuxième variable (XN₁) correspond à la vitesse de rotation d'une hélice amont de la turbomachine (1), et la troisième variable (XN₂) correspond à la vitesse de rotation d'une hélice aval de la turbomachine (1), la première grandeur de commande correspond au débit de carburant de la turbomachine (1), la deuxième grandeur de commande (β₁) correspond au pas de l'hélice amont de la turbomachine (1) et la troisième grandeur de commande (β₂) correspond au pas de l'hélice aval de la turbomachine (1).

4. Système de commande (10) d'une première, d'une deuxième et d'une troisième variables (XNP, XN₁, XN₂) d'une turbomachine (1) en fonction d'une première, d'une deuxième et d'une troisième grandeurs de commande (WF, β₁, β₂) d'une turbomachine (1) pouvant chacune être saturée en fonction des paramètres de fonctionnement de la turbomachine (1), le système de commande (10) comprenant :
- un premier correcteur (11) à trois sorties recevant en entrée les valeurs des trois variables (XNP, XN₁, XN₂) de la turbomachine (1) ainsi que, pour chacune desdites trois variables reçues (XNP, XN₁, XN₂), une consigne correspondante (XNP_{dmd}, XN_{1dmd}, XN_{2dmd}), les trois sorties du premier correcteur correspondant aux trois grandeurs de commande (WF, β₁, β₂) de la turbomachine (1),
- une première unité de sélection (13) configurée pour sélectionner, en fonction des paramètres de fonctionnement de la turbomachine (1), la valeur de la première grandeur de commande (WF) à délivrer à la turbomachine (1) parmi une valeur maximale de la première grandeur de commande, une valeur minimale de la première grandeur de commande et la valeur de la première grandeur de commande issue de ladite première détermination,
- un second correcteur (12) à deux sorties recevant en entrée la valeurs des trois variables (XNP, XN₁, XN₂) de la turbomachine (1) ainsi que la consigne de la deuxième variable (XN_{1dmd}) et la consigne de la troisième variable (XN_{2dmd}) et la valeur de la première grandeur de commande (WF) délivrée par la première unité de saturation, les deux sorties du second correcteur correspondant aux deuxième et troisième grandeurs de commande (β₁, β₂) de la turbomachine (1), et
- une seconde unité de sélection (14) configurée pour délivrer en sortie, en fonction de la sélection de la première unité de sélection, soit le couple de deuxième et troisième grandeurs de commande déterminées par le premier correcteur, soit le couple de deuxième et troisième grandeurs de commande déterminées par le second correcteur,
le système de commande (10) délivrant en sortie, pour commander la turbomachine (1), la valeur de la première grandeur de commande (WF) délivrée par la première unité de saturation et les valeurs des deuxième et troisième grandeurs de commande (β₁, β₂) délivrées par la seconde unité de saturation.

5. Système de commande (10) selon la revendication 4, comprenant en outre un intégrateur (15) recevant en entrée la valeur de la première grandeur de commande (WF) délivrée par la première unité de saturation et les valeurs des deuxième et troisième grandeurs de commande (β₁, β₂) délivrées par la seconde unité de saturation, et délivrant les valeurs traitées des première, deuxième et troisième grandeurs de commande à la turbomachine (1).

6. Système de commande (10) selon l'une des revendications 4 ou 5, dans lequel la première variable (XNP) correspond à la vitesse de rotation d'un compresseur basse pression de la turbomachine (1), la deuxième variable (XN₁) correspond à la vitesse de rotation d'une hélice amont de la turbomachine (1), et la troisième variable (XN₂) correspond à la vitesse de rotation d'une hélice aval de la turbomachine (1), la première grandeur de commande correspond au débit de carburant de la turbomachine (1), la deuxième grandeur de commande (β₁) correspond au pas de l'hélice amont de la turbomachine (1) et la troisième grandeur de commande (β₂) correspond au pas de l'hélice de aval de la turbomachine (1).

7. Aéronef comprenant au moins une turbomachine (1) et au moins un système de commande (10) selon l'une des revendications 1 à 6 commandant au moins une desdites au moins une turbomachine (1).

8. Aéronef selon la revendication 7, dans lequel au moins une desdites au moins une turbomachine (1) commandée par ledit au moins un système de commande (10) est une turbomachine à soufflante non carénée.

## Patentansprüche

1. Verfahren zur Steuerung einer ersten, einer zweiten und einer dritten Variablen (XNP, XN₁, XN₂) einer Turbomaschine (1) in Abhängigkeit einer ersten, einer zweiten und einer dritten Steuergröße (WF, β₁, β₂) einer Turbomaschine (1), die jeweils in Abhängigkeit von den Betriebsparametern der Turbomaschine (1) gesättigt werden können, wobei das Steuerverfahren umfasst:
- eine Messung (100) der Werte der drei Variablen (XNP, XN₁, XN₂) der Turbomaschine (1),
- einen Empfang (110) eines entsprechenden Sollwertes (XNP_{dmd}, XN_{1dmd}, XN_{2dmd}) für jede der drei empfangenen Variablen (XNP, XN₁, XN₂),
- eine erste Bestimmung (120), bei der die ersten Werte der drei Steuergrößen (WF, β₁, β₂) der Turbomaschine (1) aus den Werten der drei Variablen (XNP, XN₁, XN₂) und den drei entsprechenden Sollwerten (XNP_{dmd}, XN_{1dmd}, XN_{2dmd}) bestimmt werden,
- eine Auswahl (130) des Wertes der ersten Steuergröße (WF), der an die Turbomaschine (1) abzugeben ist, aus einem Maximalwert der ersten Steuergröße, einem Mindestwert der ersten Steuergröße und dem Wert der ersten Steuergröße, der sich aus der ersten Bestimmung ergibt, wobei die erste Auswahl von den Betriebsparametern der Turbomaschine (1) abhängt,
- eine zweite Bestimmung (140), bei der zweite Werte der zweiten und der dritten Steuergröße (β₁, β₂) der Turbomaschine (1) aus den Werten der drei Variablen (XNP, XN₁, XN₂), dem zweiten und dem dritten entsprechenden Sollwert (XN_{1dmd}, XN_{2dmd}) und dem Wert der ersten Steuergröße, der bei der Auswahl (130) ausgewählt wird, bestimmt werden,
- eine Wahl (150) des Wertepaares der zweiten und der dritten Steuergröße, das an die Turbomaschine abzugeben ist, zwischen dem Paar der zweiten und der dritten Steuergröße (β₁, β₂), die bei der ersten Bestimmung (120) bestimmt werden, und dem Paar der zweiten und der dritten Steuergröße (β₁, β₂), die bei der zweiten Bestimmung (140) bestimmt werden, wobei die Wahl des abzugebenden Wertepaares der zweiten und der dritten Steuergröße (β₁, β₂) von dem Wert der ersten abzugebenden Steuergröße (WF) abhängt, der bei der Auswahl (130) ausgewählt wird, und
- eine Übertragung (170) des Wertes der ersten ausgewählten Steuergröße (WF) und der Werte der zweiten und der dritten gewählten Steuergröße (β₁, β₂) an die Turbomaschine (1).

2. Steuerverfahren nach Anspruch 1, ferner umfassend eine Integration (160) des Wertes der ersten ausgewählten Steuergröße (WF) und der Werte der zweiten und der dritten gewählten Steuergröße (β₁, β₂) vor ihrer Übertragung an die Turbomaschine (1).

3. Steuerverfahren nach einem der Ansprüche 1 oder 2, wobei die erste Variable (XNP) der Drehgeschwindigkeit eines Niederdruckverdichters der Turbomaschine (1) entspricht, die zweite Variable (XN₁) der Drehgeschwindigkeit eines stromaufwärtigen Propellers der Turbomaschine (1) entspricht und die dritte Variable (XN₂) der Drehgeschwindigkeit eines stromabwärtigen Propellers der Turbomaschine (1) entspricht, die erste Steuergröße dem Kraftstoffdurchsatz der Turbomaschine (1) entspricht, die zweite Steuergröße (β₁) der Steigung des stromaufwärtigen Propellers der Turbomaschine (1) entspricht und die dritte Steuergröße (β₂) der Steigung des stromabwärtigen Propellers der Turbomaschine (1) entspricht.

4. Steuersystem (10) einer ersten, einer zweiten und einer dritten Variablen (XNP, XN₁, XN₂) einer Turbomaschine (1) in Abhängigkeit einer ersten, einer zweiten und einer dritten Steuergröße (WF, β₁, β₂) einer Turbomaschine (1), die jeweils in Abhängigkeit von den Betriebsparametern der Turbomaschine (1) gesättigt werden können, wobei das Steuersystem (10) umfasst:
- einen ersten Korrektor (11) mit drei Ausgängen, der als Eingang die Werte der drei Variablen (XNP, XN₁, XN₂) der Turbomaschine (1) sowie für jede der drei empfangenen Variablen (XNP, XN₁, XN₂) einen entsprechenden Sollwert (XNP_{dmd}, XN_{1dmd}, XN_{2dmd}) empfängt, wobei die drei Ausgänge des ersten Korrektors den drei Steuergrößen (WF, β₁, β₂) der Turbomaschine (1) entsprechen,
- eine erste Auswahleinheit (13), die dazu ausgestaltet ist, in Abhängigkeit von den Betriebsparametern der Turbomaschine (1) den Wert der ersten Steuergröße (WF), der an die Turbomaschine (1) abzugeben ist, aus einem Maximalwert der ersten Steuergröße, einem Mindestwert der ersten Steuergröße und dem Wert der ersten Steuergröße, der sich aus der ersten Bestimmung ergibt, auszuwählen,
- einen zweiten Korrektor (12) mit zwei Ausgängen, der als Eingang die Werte der drei Variablen (XNP, XN₁, XN₂) der Turbomaschine (1) sowie den Sollwert der zweiten Variablen (XN_{1dmd}) und den Sollwert der dritten Variablen (XN_{2dmd}) und den Wert der ersten Steuergröße (WF), der durch die erste Sättigungseinheit abgegeben wird, empfängt, wobei die zwei Ausgänge des zweiten Korrektors der zweiten und der dritten Steuergröße (β₁, β₂) der Turbomaschine (1) entsprechen, und
- eine zweite Auswahleinheit (14), die dazu ausgestaltet ist, abhängig von der Auswahl der ersten Auswahleinheit entweder das durch den ersten Korrektor bestimmte Paar aus zweiter und dritter Steuergröße oder das durch den zweiten Korrektor bestimmte Paar aus zweiter und dritter Steuergröße als Ausgang abzugeben, wobei das Steuersystem (10) als Ausgang zum Steuern der Turbomaschine (1) den Wert der durch die erste Sättigungseinheit abgegebenen ersten Steuergröße (WF) und die Werte der durch die zweite Sättigungseinheit abgegebenen zweiten und dritten Steuergröße (β₁, β₂) abgibt.

5. Steuersystem (10) nach Anspruch 4, ferner umfassend einen Integrator (15), der als Eingang den Wert der ersten Steuergröße (WF), der durch die erste Sättigungseinheit abgegeben wird, und die Werte der zweiten und der dritten Steuergröße (β₁, β₂), die durch die zweite Sättigungseinheit abgegeben werden, empfängt und die behandelten Werte der ersten, der zweiten und der dritten Steuergröße an die Turbomaschine (1) abgibt.

6. Steuersystem (10) nach einem der Ansprüche 4 oder 5, wobei die erste Variable (XNP) der Drehgeschwindigkeit eines Niederdruckverdichters der Turbomaschine (1) entspricht, die zweite Variable (XN₁) der Drehgeschwindigkeit eines stromaufwärtigen Propellers der Turbomaschine (1) entspricht und die dritte Variable (XN₂) der Drehgeschwindigkeit eines stromabwärtigen Propellers der Turbomaschine (1) entspricht, die erste Steuergröße dem Kraftstoffdurchsatz der Turbomaschine (1) entspricht, die zweite Steuergröße (β₁) der Steigung des stromaufwärtigen Propellers der Turbomaschine (1) entspricht und die dritte Steuergröße (β₂) der Steigung des stromabwärtigen Propellers der Turbomaschine (1) entspricht.

7. Luftfahrzeug, umfassend mindestens eine Turbomaschine (1) und mindestens ein Steuersystem (10) nach einem der Ansprüche 1 bis 6, das mindestens eine von der mindestens einen Turbomaschine (1) steuert.

8. Luftfahrzeug nach Anspruch 7, wobei mindestens eine von der mindestens einen Turbomaschine (1), die durch das mindestens eine Steuersystem (10) gesteuert wird, eine Turbomaschine mit nicht gekapseltem Gebläse ist.

## Claims

1. A method for controlling a first, a second and a third variable (XNP, XN₁, XN₂) of a turbomachine (1) as a function of a first, a second and a third control quantity (WF, β₁, β₂) of a turbomachine (1) which can each be saturated as a function of the operating parameters of the turbomachine (1), the control method comprising:
- a measurement (100) of the values of the three variables (XNP, XN₁, XN₂) of the turbomachine (1),
- a receipt (110), for each of said three variables received (XNP, XN₁, XN₂), of a corresponding setpoint (XNP_{dmd}, XN_{1dmd}, XN_{2dmd}),
- a first determination (120) in which the first values of the three control quantities (WF, β₁, β₂) of the turbomachine (1) are determined from the values of the three variables (XNP, XN₁, XN₂) and said three corresponding setpoints (XNP_{dmd}, XN_{1dmd}, XN_{2dmd}),
- a selection (130) of the value of the first control quantity (WF) to be delivered to the turbomachine (1) among a maximum value of the first control quantity, a minimum value of the first control quantity and the value of the first control quantity resulting from said first determination, the first selection depending on the operating parameters of the turbomachine (1),
- a second determination (140) in which second values of the second and third control quantities (β₁, β₂) of the turbomachine (1) are determined from the values of the three variables (XNP, XN₁, XN₂), from the second and third corresponding setpoints (XN1_{dmd}, XN2_{dmd}), and from the value of the first control quantity selected during the selection (130),
- a choice (150) of the pair of values of the second and third control quantities to be delivered to the turbomachine between the pair of the second and third control quantities (β₁, β₂) determined during the first determination (120) and the pair of the second and third control quantities (β₁, β₂) determined during the second determination (140), the choice of the pair of values of the second and third control quantities (β₁, β₂) to be delivered depending on the value of the first control quantity (WF) to be delivered selected during the selection (130), and
- a transmission (170) to the turbomachine (1) of the value of the first control quantity (WF) selected and of the values of the second and third control quantities (β₁, β₂) selected.

2. The control method according to claim 1, further comprising an integration (160) of the value of the first control quantity (WF) selected and of the values of the second and third control quantities (β₁, β₂) selected before their transmission to the turbomachine (1).

3. The control method according to any of claims 1 or 2, wherein the first variable (XNP) corresponds to the speed of rotation of a low-pressure compressor of the turbomachine (1), the second variable (XN₁) corresponds to the speed of rotation of an upstream propeller of the turbomachine (1), and the third variable (XN₂) corresponds to the speed of rotation of a downstream propeller of the turbomachine (1), the first control quantity corresponds to the fuel flow rate of the turbomachine (1), the second control quantity (β₁) corresponds to the pitch of the upstream propeller of the turbomachine (1) and the third control quantity (β₂) corresponds to the pitch of the downstream propeller of the turbomachine (1).

4. A system for controlling (10) a first, a second and a third variable (XNP, XN₁, XN₂) of a turbomachine (1) as a function of a first, a second and a third control quantity (WF, β₁, β₂) of a turbomachine (1) which can each be saturated as a function of the operating parameters of the turbomachine (1), the control system (10) comprising:
- a first corrector (11) with three outputs receiving as input the values of the three variables (XNP, XN₁, XN₂) of the turbomachine (1) as well as, for each of said three variables received (XNP, XN₁, XN₂), a corresponding setpoint (XNP_{dmd}, XN1_{dmd}, XN2_{dmd}), the three outputs of the first corrector corresponding to the three control quantities (WF, β₁, β₂) of the turbomachine (1),
- a first selection unit (13) configured to select, as a function of the operating parameters of the turbomachine (1), the value of the first control quantity (WF) to be delivered to the turbomachine (1) among a maximum value of the first control quantity, a minimum value of the first control quantity and the value of the first control quantity resulting from said first determination,
- a second corrector (12) with two outputs receiving as input the values of the three variables (XNP, XN₁, XN₂) of the turbomachine (1) as well as the setpoint of the second variable (XN_{1dmd}) and the setpoint of the third variable (XN_{2dmd}) and the value of the first control quantity (WF) delivered by the first saturation unit, the two outputs of the second corrector corresponding to the second and third control quantities (β₁, β₂) of the turbomachine (1), and
- a second selection unit (14) configured to output, based on the selection of the first selection unit, either the pair of second and third control quantities determined by the first corrector, or the pair of second and third control quantities determined by the second corrector,
the control system (10) outputting, to control the turbomachine (1), the value of the first control quantity (WF) delivered by the first saturation unit and the values of the second and third control quantities (β₁ , β₂) delivered by the second saturation unit.

5. The control system (10) according to claim 4, further comprising an integrator (15) receiving as input the value of the first control quantity (WF) delivered by the first saturation unit and the values of the second and third control quantities (β₁, β₂) delivered by the second saturation unit, and delivering the processed values of the first, second and third control quantities to the turbomachine (1).

6. The control system (10) according to any of claims 4 or 5, wherein the first variable (XNP) corresponds to the speed of rotation of a low-pressure compressor of the turbomachine (1), the second variable (XN₁) corresponds to the speed of rotation of an upstream propeller of the turbomachine (1), and the third variable (XN₂) corresponds to the speed of rotation of a downstream propeller of the turbomachine (1), the first control quantity corresponds to the fuel flow rate of the turbomachine (1), the second control quantity (β₁) corresponds to the pitch of the upstream propeller of the turbomachine (1) and the third control quantity (β₂) corresponds to the pitch of the downstream propeller of the turbomachine (1).

7. An aircraft comprising at least one turbomachine (1) and at least one control system (10) according to any of claims 1 to 6 controlling at least one of said at least one turbomachine (1).

8. The aircraft according to claim 7, wherein at least one of said at least one turbomachine (1) controlled by said at least one control system (10) is a turbomachine with unducted fan.
